# EUROPÄISCHE PATENTSCHRIFT

(11) **EP 1 471 401 B1**
(45) Veröffentlichungstag und Bekanntmachung des Hinweises auf die Patenterteilung: **08.11.2006**
(21) Anmeldenummer: 04009459.1
(22) Anmeldetag: 21.04.2004
(51) Int. Cl.: G05B 19/401, B25J 9/16

(54) **Verfahren zur Einmessung des Koordinatensystems einer Kamera eines Roboters gegenüber dem Koordinatensystem des Roboters oder umgekehrt**
Method for measurement of the coordinate system of a robot camera relative to the coordinate system of the robot or vice versa
Procédé pour mesurer le système de coordonnées d'une camera robot par rapport au système de coordonnées du robot ou vice versa

(30) Priorität: 23.04.2003 DE 10318460
(43) Veröffentlichungstag der Anmeldung: 27.10.2004
(73) Patentinhaber: VMT Bildverarbeitungssysteme GmbH, 69469 Weinheim (DE)
(72) Erfinder: Grab, Thomas, Dipl.-Inf. (FH), 74933 Neidenstein (DE)
(74) Vertreter: Mierswa, Klaus

(56) Entgegenhaltungen:
- EP-A- 0 301 527
- WO-A-01/00370
- GB-A- 2 301 183
- US-A- 4 969 108
- US-A- 5 297 238

## Beschreibung

### Technisches Gebiet:

Die Erfindung betrifft ein Verfahren zur genauen Einmessung des Koordinatensystems einer Kamera eines Roboters gegenüber dem Koordinatensystem des Roboters, oder umgekehrt.

Die Erfindung betrifft ein Verfahren zur Kalibrierung eines Roboters oder eines Werkzeugs, wie Greifhand, eines Roboters in Bezug auf eine mit dem Roboter fest bzw. starr verbundene Kamera.

Die Erfindung liegt somit auf dem technischen Gebiet eines Verfahrens zur Kalibrierung eines Roboters oder eines Werkzeugs, wie Greifhand, eines Roboters in Bezug auf eine mit dem Roboter, insbesondere dessen Greifhand, fest bzw. starr verbundene Kamera, insbesondere eine solche, welche die mit einer digitalen Bildverarbeitung zusammenarbeitet, um anschließend für die Greifhand des Roboters die Position eines Werkstücks oder Objekts unter Verwendung wenigstens einer dergestalt kalibrierten Kamera bestimmen und anfahren zu können, gemäß dem Oberbegriff des Anspruchs 1.

### Stand der Technik:

Um eine 3D-Vermessung bzw. eine Lageerkennung, z.B. eine solche im dreidimensionalen Raum oder im zweieinhalbdimensionalen Raum oder im zwedimensionalen Raum oder im eindimensionalen Raum, d.h. bei z.B. 1 bis 6 Freiheitsgraden, für die Steuerung eines Roboters durchführen zu können, damit dieser Teile korrekt aufnehmen, bearbeiten und platzieren kann, muss man sich eines Hilfsmittels für den Roboter bedienen, zum Beispiel optischer Sensoren, wie Videokameras. Dabei ist es erforderlich, die Kamera auf der Roboterseite einzumessen und zwar nach Möglichkeit genauer, wie eine normale Tooleinmessung am Roboter es vorsieht. Nach der Toolkalibrierung ist der Roboter in der Lage, mit dem Tool, z.B. eine Greifhand, Punkte im Raum mit Hilfe einer Kamerasoftware anzufahren. Hierzu muss die Software des Bildverarbeitungssystems die Position der Kamera in Bezug zum Koordinatensystem des Roboters bzw. des Tools kennen. Jedoch nimmt der Roboter dabei keine Rücksicht auf die Position der Achsen, was zur Folge hat, dass die Richtung, aus welcher ein bestimmter Punkt angefahren wird, willkürlich ist, was bedeutet, dass er nur der visuellen Kontrolle des Programmierers des Roboters unterliegt. Für das Kamerasystem jedoch ist es notwendig, die Position der Kamera im Raum auch bezüglich der Winkelstellungen zu kennen, damit diese dem Roboter vorgegeben werden können. Dazu ist eine Erweiterung der Toolkalibrierung notwendig, um alle Freiheitsgrade bestimmen zu können.

Die Herstellung des Bezugs bzw. die Übereinanderlegung der Koordinatensysteme der Kamera und desjenigen des Roboters wird Kamerakalibrierung genannt. Im folgenden wird das Koordinatensystem des Roboters als Roboter-Koordinatensystem und dasjenige der Kamera als Kamera-Koordinatensystem bezeichnet.

Die berührungslose und schnelle Lageerkennung oder 3D-Vermessung eines Objektes, z.B. eines dreidimensionalen Körpers, besitzt eine Schlüsselfunktion auf dem Weg zu höherer Automatisierung und zur vollständigen Qualitätssteuerung und Qualitätsüberwachung sowie Produktionssteuerung in vielen Fertigungsprozessen, weil sie die genaue Kenntnis der Position von Objekten im Raum und deren Lage relativ zueinander liefert. In der industriellen Produktion kommt der schnellen und berührungslosen Lageerkennung und Formerfassung, insbesondere der 3D-Positions- und 3D-Formerfassung im Raum, große Bedeutung zu, zum Beispiel für die Robotersichtführung in der automatischen Montage, 3D-Navigation im Raum, Maßhaltigkeitskontrolle, die Vollständigkeitsprüfung, Prüfung von Oberflächen, Reserve-Engineering, Überwachung von Sicherheitszonen. Die 3D-Formerfassung kann z.B. die Positionen von Objekten liefern, die unabhängig vom Oberflächenzustand, von der Entfernung, Drehung und Beleuchtung sind, das heißt, sie sind rotations-, verschiebungs- und beleuchtungsinvariant.

Hierzu werden zur Kalibrierung von elektronischen Kameras Verfahren eingesetzt, die sich mit der Auswertung von bekannten Merkmalen im Kamerabild befassen, wobei alle bekannten Verfahren auf dem Modell der Lochkamera aufsetzen.

Parameter sind die optimale Brennweite, die Position der Lichteintrittsöffnung im Raum und Linsenverzeichnungsparameter sowie Parameter, die sich mit der Position des CCD-Chips im Bezug zum Lochkoordinatensystem befassen. In den Kamerabildern versucht man, über die Betrachtung von Kalibrierkörpern oder Kalibrierplatten die Parameter der Kameramodelle zu ermitteln.

Durch die EP 0 763 406 A1 ist ein Verfahren zum Bestimmen der Lage eines Körpers im Raum bekannt geworden, um Manipulationen an diesem durchzuführen, mit mindestens drei räumlich getrennten elektronischen Kameras mit Bildverarbeitung. Jede der Kameras nimmt bei deren Einmessung eine ihr zugeordnete Kalibriertafel mit Punktmuster auf, deren Bilder sowie das Punktmuster zur Bestimmung der Lage der einzelnen Kamera im Raum verarbeitet und deren Lage gespeichert werden. Eine Vermessung der Kalibriertafeln zueinander erfolgt hiervon getrennt, wobei diese Werte ebenfalls gespeichert werden. Anschließend wird der zu vermessende Körper in den Raum zwischen den elektronischen Kameras verbracht. Je ein charakteristischer Punkt auf dem in den Raum verbrachten Körper wird in je einer diesem zugeordneten elektronischen Kamera abgebildet, so dass dessen Lage in Bild mit seiner konstruktiven vorgegebenen Position des charakteristischen Punktes auf den in den Raum verbrachten Körper zusammen mit den gespeicherten Werten verarbeitet wird; alle derart verarbeiteten Werte charakterisieren die Lage des in dem Raum verbrachten Körpers in den sechs räumlichen Freiheitsgraden. Nachteilig an diesem Verfahren ist prinzipiell, dass zum Bestimmen der Lage eines Körpers im Raum Kalibriertafeln verwendet werden, welche sorgfältig gehandhabt werden müssen und nicht beschädigt werden dürfen wie sie auch Lagerplatz benötigen. Der wesentliche Nachteil ist, dass die Kalibriertafeln mit einem großen Aufwand mechanisch im Sichtfeld der Kameras positioniert werden müssen und die Positionierbarkeit äußerst wiederholgenau sein muss. Diese Reproduzierbarkeit der Positionierung zu gewährleisten ist oft mit erheblichen Kosten verbunden, da die räumlichen Verhältnisse zum Beispiel in der Fördertechnik häufig schwierig sind.

Dokument EP0301527 offenbart ein Verfahren zur Einmessung eines Kamera-Koordinatensystems einer Kamera, welche an einem Kamerahalter eines Roboters befestigt ist, gegenüber einem Roboter-Koordinatensystem, wobei eine Kalibrierspitze an dem Kamerahalter befestigt wird, und die Kalibrierung durch Antasten von Referenzpunkten einer Kalibriertafel erfolgt. EP0301527 offenbart, dass auf oder in dem ersten Kalibrierkörper ein bestimmter erster Referenzpunkt gewählt wird dessen Lage im Kamerahalter-Koordinatensystem bekannt ist.

Zur Vermeidung der Verwendung von Kalibriertafeln ist durch die DE 100 16 963 A1 ein Verfahren zur Bestimmung der Position eines Werkstücks und der Position von Merkmalen des Werkstücks im 3D-Raum unter Verwendung von mindestens drei elektronischen Kameras und digitaler Bildverarbeitung bekannt geworden, bei dem die Kameras auf ein gemeinsames Weltkoordinatensystem kalibriert werden und anschließend das Werkstück in den Raum zwischen den Kameras verbracht wird. Für die Lagebestimmung von Objekten für einen Objekt-Typ werden somit wenigstens drei stationäre Kameras oder andere geeignete Sensoren eingesetzt. Aus den 2-dimensionalen Abbildern von Objekt-Merkmalen und der Kenntnis der Lage dieser Merkmale in einem gemeinsamen Koordinatensystem und der Kenntnis der Position der Kameras im Raum, wird die 3dimensionale Positionsverschiebung des Objekts gegenüber einer einmalig eingelernten Nullposition berechnet. Damit werden Manipulatoren, zum Beispiel Roboter, in ihrer Position korrigiert bzw. gesteuert, um am Objekt lagerichtig Manipulationen vornehmen zu können.

### Technische Aufgabe:

Der Erfindung liegt die Aufgabe zugrunde, ein Verfahren zur Kalibrierung eines Werkzeugs, wie Greifhand, eines Roboters in Bezug auf eine mit dem Roboter, insbesondere dessen Greifhand, fest oder starr verbundene Kamera zu schaffen, die mit einer digitalen Bildverarbeitung zusammenarbeitet, um die Kamera auf der Roboterseite in einer genaueren Weise einzumessen, wie eine normale Tooleinmessung des Tandes der Technik am Roboter es vorsieht, bzw. ein Verfahren zur Kalibrierung zwischen mindestens einer an einem Roboter angebrachten elektronischen Kamera mit digitaler Bildverarbeitung, z.B. einer so genannten "Handkamera", und dem Roboter zu schaffen, um die Kamera und das Kamerakoordinatensystem in das Roboterkoordinatensystem und somit die Roboterkoordinaten in das Bildverarbeitungssystem zu integrieren, wobei das Verfahren ohne Kalibriertafeln auskommen und in einfacher Weise durchführbar und wiederholbar sein soll, z.B. damit der Roboter anschließend die Position eines Werkstücks und die Position von Merkmalen im 3D-Raum unter Verwendung wenigstens einer dergestalt kalibrierten Kamera bestimmen kann, oder damit der Roboter unter Verwendung der Ergebnisse einer kameragestützten Lageerkennung an eine bestimmte Position und/oder in eine bestimmte Konfiguration gesteuert werden kann.

Diese Aufgabe wird erfindungsgemäß gelöst durch ein Verfahren zur genauen Einmessung eines Kamera-Koordinatensystems einer Kamera, welche an einem Kamerahalter starr angeordnet ist, gegenüber einem Roboter-Koordinatensystem eines Roboters, oder umgekehrt, wobei der Kamerahalter an dem Roboter angeordnet ist und die Lage und Orientierung des Kamerahalters im Roboter-Koordinatensystem jederzeit abfragbar sind und die Orientierung der Bildebene B der Kamera K im Kamera-Koordinatensystem bekannt ist, mit folgenden Schritten:
- A1): an dem Kamerahalter wird ein erster Kalibrierkörper starr angeordnet,
- A2): auf oder in dem ersten Kalibrierkörper wird ein bestimmter erster Referenzpunkt gewählt, dessen Lage im Kamera-Koordinatensystem bekannt ist,
- A3): die Lage des ersten Referenzpunktes wird in Bezug auf den Kamerahalter bestimmt,
- A4): aus dem Vergleich der Lagen des ersten Referenzpunktes im Kamera-Koordinatensystem und in Bezug auf den Kamerahalter wird die Lage des Ursprungs des Kamera-Koordinatensystems in Bezug auf den Kamerahalter bestimmt,
- B1): an dem Kamerahalter wird ein zweiter Kalibrierkörper starr angeordnet,
- B2): auf oder in dem zweiten Kalibrierkörper wird mindestens ein bestimmter zweiter Referenzpunkt gewählt, welcher einen anderen Abstand von der Kamera aufweist als der erste Referenzpunkt und dessen Lage im Kamera-Koordinatensystem ebenfalls bekannt ist oder wobei die Richtung der Verbindungslinie zwischen dem ersten und dem zweiten Referenzpunkt im Kamera-Koordinatensystem bekannt ist,
- B3): Lage des zweiten Referenzpunktes wird in Bezug auf den Kamerahalter bestimmt,
- C1): mit der Kamera wird ein beliebiges Merkmal eines Objekts erfasst und abgebildet, so dass das Bild des Merkmals in der Bildebene der Kamera eine erste Lage einnimmt,
- C2): die Orientierung des Kamerahalters im Roboter-Koordinatensystem wird abgefragt,
- C3): der Roboter wird ohne Veränderung der Orientierung der Kamera gegenüber dem Merkmal so gesteuert, dass der Kamerahalter und somit die Kamera in einer zur Bildebene der Kamera nicht senkrechten, im Roboter-Koordinatensystem bekannten Verschieberichtung gegenüber dem Merkmal um eine bestimmte Strecke verschoben werden, so dass das Bild des Merkmals (M) in der Bildebene der Kamera eine zweite Lage einnimmt,
- C4): aus dem Lageunterschied zwischen der ersten und der zweiten Lage in der Bildebene der Kamera wird die Richtung der Projektion der Verschieberichtung auf die Bildebene der Kamera im Kamera-Koordinatensystem bestimmt,
- D): die Orientierung des Kamera-Koordinatensystems in Bezug auf den Kamerahalter wird bestimmt aus
- der Richtung der Verbindungslinie des ersten und des zweiten Referenzpunktes in Bezug auf den Kamerahalter,
- der Verschieberichtung im Roboter-Koordinatensystem und
- den Ergebnissen der Schritte C2) und C4)
- E): Lage und Orientierung des Kamerahalters im Roboter-Koordinatensystem werden abgefragt,
- F): aus dem Ergebnissen der Schritte A4), D) und E) werden entweder die Lage und Orientierung des Kamera-Koordinatensystems im Roboter-Koordinatensystem bestimmt oder umgekehrt.

In den Schritten A3) und B3) werden somit der erste und der zweite Referenzpunkt gegenüber dem Kamerahalter eingemessen. Zur Erfassung der Lagen des Bildes des Merkmals in der Bildebene der Kamera kann insbesondere ein Bildverarbeitungsprogramm verwendet werden.

Die Kamera kann insbesondere eine elektronische Kamera mit digitaler Bildverarbeitung sein. Die Ergebnisse einer derartigen Kalibrierung können z.B. angewandt werden, um mit Hilfe der Kamera eine Lageerkennung durchzuführen, d.h. z.B. die Position eines beliebigen Objektes, insbesondere eines Werkstücks oder die Position von Merkmalen unter Verwendung wenigstens einer dergestalt kalibrierten Kamera bestimmen zu können. Die Lageerkennung kann insbesondere eine dreidimensionale Lageerkennung sein.

Die Ergebnisse der Lageerkennung können insbesondere zur zielgenauen Steuerung des Roboters verwendet werden; jedoch ist erfindungsgemäß auch eine Lageerkennung im zweieinhalbdimensionalen Raum oder im zweidimensionalen Raum oder im eindimensionalen Raum, d.h. bei z.B. 1 bis 6 Freiheitsgraden, möglich.

Das erfindungsgemäße Verfahren vereinfacht die Einmessung zwischen den beiden genannten Koordinatensystemen erheblich, ermöglicht eine derartige Einmessung in sehr kurzer Zeit bei sehr hoher Genauigkeit und macht die umständliche Verwendung von so genannten Kalibriertafeln, überflüssig. Dieser Vorteil ist in der Praxis von großer Tragweite, da Kalibriertafeln im allgemeinen große und damit sperrige und zudem gegen Beschädigung sehr empfindliche, mit außerordentlich großem Aufwand hergestellte Präzisionsanfertigungen sind, welche sorgfältig verwahrt und unter Umständen zunächst unter großem Aufwand und umfangreichen Schutzmaßnahmen herbeigeschafft werden müssen. Vorteilhafterweise kann eine erfindungsgemäße Einmessung vollautomatisch durchgeführt werden; bei einmal installierter Software kann die Einmessung daher jederzeit auf Knopfdruck vorgenommen werden und erfordert somit nicht mehr die Mitarbeit oder sogar die Anreise von auf Einmessungen speziell ausgebildetem Personal; als einzige Vorarbeit sind lediglich die Anbringung des Kalibrierkörpers und die Einmessung des Referenzpunktes erforderlich. Die Kosten einer Einmessung können daher durch das erfindungsgemäße Verfahren drastisch verringert werden, wie auch die Ausfallzeiten einer Roboteranlage bei einer versehentlichen Zerstörung der Kalibrierung zwischen Roboter und Kamera stark verkürzt werden können.

Gemäß einer alternativen Variante der Erfindung wird der Schritt B1) weggelassen und anstelle des Schrittes B2) folgender Schritt ausgeführt: Schritt B2'): auf oder in dem ersten Kalibrierkörper wird ein bestimmter zweiter Referenzpunkt gewählt, welcher einen anderen Abstand von der Kamera aufweist als der erste Referenzpunkt und dessen Lage im Kamera-Koordinatensystem ebenfalls bekannt ist oder wobei die Richtung der Verbindungslinie zwischen dem ersten und dem zweiten Referenzpunkt im Kamera-Koordinatensystem bekannt ist. Gemäß dieser Variante genügt somit die Verwendung eines einzigen Kalibrierkörpers, wobei aber dennoch zwei Referenzpunkte mit unterschiedlichem Abstand zur Kamera gewählt werden.

Bevorzugt wird im Schritt C2) die relative Orientierung zwischen der Kamera und dem Roboter nicht verändert. Insbesondere kann der Roboter zur Durchführung des Schrittes C2) linear verfahren werden.

Gemäß einer bevorzugten Variante des erfindungsgemäßen Verfahrens werden der erste und der zweite Referenzpunkt so gewählt, dass ihre Verbindungslinie zur optischen Achse der Kamera parallel verläuft. Hierbei können der erste und der zweite Referenzpunkt insbesondere jeweils auf der optischen Achse der Kamera gewählt werden. Als Kamera-Koordinatensystem kann insbesondere ein kartesisches Koordinatensystem gewählt werden, dessen z-Achse zur optischen Achse der Kamera parallel verläuft. Falls sich hierbei der erste und der zweite Referenzpunkt z.B. beide auf der optischen Achse der Kamera befinden, unterscheiden sich der erste und der zweite Referenzpunkt im Kamera-Koordinatensystem nur durch ihre z-Koordinate.

Gemäß einer bevorzugten Variante des erfindungsgemäßen Verfahrens wird der Ursprung des Kamera-Koordinatensystems auf der optischen Achse der Kamera gewählt. Der Ursprung des Kamera-Koordinatensystems kann hierbei insbesondere in der Bildebene der Kamera gewählt werden.

Anstelle des Schrittes C3) kann alternativ das Merkmal entgegen der Verschieberichtung um die bestimmte Strecke verschoben werden, so dass das Bild des Merkmals in der Bildebene der Kamera die zweite Lage einnimmt.

Insbesondere kann die z-Achse des Roboter-Koordinatensystems vertikal verlaufen, wobei die Verschieberichtung horizontal gewählt wird. Die Verschieberichtung kann insbesondere parallel zur x-y-Ebene des Roboter-Koordinatensystems gewählt werden.

Gemäß einer bevorzugten Variante des erfindungsgemäßen Verfahrens wird im Schritt B1) der erste Kalibrierkörper von dem Kamerahalter abgenommen und danach der zweite Kalibrierkörper anstelle des ersten Kalibrierkörpers starr an dem Kamerahalter angeordnet.

Hier wird bevorzugt im Schritt A1) das Objektiv der Kamera von der Kamera abgenommen und der erste Kalibrierkörper anstelle des Objektivs an der Kamera starr angeordnet, und im Schritt B1) der zweite Kalibrierkörper anstelle des ersten Kalibrierkörpers starr an der Kamera angeordnet.

Gemäß einer bevorzugten Variante des erfindungsgemäßen Verfahrens wird als erster Kalibrierkörper eine erste Kalibrierspitze verwendet und als erster Referenzpunkt das äußerste Ende der ersten Kalibrierspitze gewählt, wobei im Schritt A3) die Lage des ersten Referenzpunktes in Bezug auf den Kamerahalter ermittelt wird wie folgt:
- a1): der Roboter wird so gesteuert, dass das äußerste Ende der ersten Kalibrierspitze einen beliebigen ortsfesten ersten Hilfspunkt anfährt, wobei der Kamerahalter nach Erreichen des ersten Hilfspunktes im Roboter-Koordinatensystem eine bestimmte Lage und Orientierung aufweist, welche abgefragt werden,
- a2): anschließend wird der Roboter so gesteuert, dass das äußerste Ende der ersten Kalibrierspitze wiederum den ersten Hilfspunkt anfährt, wobei der Kamerahalter nach Erreichen des ersten Hilfspunktes im Roboter-Koordinatensystem gegenüber dem Schritt a1) eine andere Lage und Orientierung aufweist, welche ebenfalls abgefragt werden,
- a3): der Schritt a2) wird für mindestens eine gegenüber den Schritten a1) und a2) nochmals andere Lage und Orientierung des Kamerahalters entsprechend erneut ausgeführt,
- b): und aus den in den Schritten a1) bis a3) gewonnenen Ergebnissen wird die Lage des ersten Hilfspunktes und somit die Lage des äußersten Endes der ersten Kalibrierspitze in Bezug auf den Kamerahalter berechnet.

Ebenso kann als zweiter Kalibrierkörper eine zweite Kalibrierspitze verwendet und als zweiter Referenzpunkt das äußerste Ende der zweiten Kalibrierspitze gewählt werden, wobei im Schritt B3) die Lage des zweiten Referenzpunktes in Bezug auf den Kamerahalter ermittelt wird wie folgt:
- c1): der Roboter wird so gesteuert, dass das äußerste Ende der zweiten Kalibrierspitze einen beliebigen ortsfesten zweiten Hilfspunkt anfährt, wobei der Kamerahalter nach Erreichen des zweiten Hilfspunktes im Roboter-Koordinatensystem eine bestimmte Lage und Orientierung aufweist, welche abgefragt werden,
- c2): anschließend wird der Roboter so gesteuert, dass das äußerste Ende der zweiten Kalibrierspitze wiederum den zweiten Hilfspunkt anfährt, wobei der Kamerahalter nach Erreichen des zweiten Hilfspunktes im Roboter-Koordinatensystem gegenüber dem Schritt c1) eine andere Lage und Orientierung aufweist, welche ebenfalls abgefragt werden,
- c3): der Schritt c2) wird für mindestens eine gegenüber den Schritten c1) und c2) nochmals andere Lage und Orientierung des Kamerahalters entsprechend erneut ausgeführt,
- d): und aus den in den Schritten c1) bis c3) gewonnenen Ergebnissen wird die Lage des zweiten Hilfspunktes und somit die Lage des äußersten Endes der zweiten Kalibrierspitze in Bezug auf den Kamerahalter berechnet.

Gemäß einer Variante der Erfindung wird der Roboter während der Ausführung des Schrittes A3) und/oder während der Ausführung des Schrittes B3) nicht translatorisch verfahren. Insbesondere kann das Verfahren daher mit einem Roboter durchgeführt werden, welcher von vornherein nicht translatorisch verfahrbar ist.

Gemäß einer bevorzugten Variante der Erfindung wird der vorbeschriebene Prozess automatisch durchgeführt.

Gemäß einer weiteren bevorzugten Variante der Erfindung wird zur Erhöhung der Genauigkeit der Einmessung der Schritt der Schritt a3) mehr als einmal ausgeführt somit der erste Hilfspunkt mehr als dreimal angefahren, und/oder der Schritt c3) mehr als einmal ausgeführt somit der zweite Hilfspunkt mehr als dreimal angefahren, wobei über die hierdurch gewonnenen redundanten Messwerte oder Ergebnisse gemittelt werden kann.

Um die Durchführung der Verfahrensschritte a1) bis a3) bzw. c1 bis c3) zu erleichtern, kann der erste Hilfspunkt durch eine ortsfeste Markierung markiert werden und/oder der zweite Hilfspunkt durch eine ortsfeste Markierung markiert werden. Beispielsweise kann der jeweilige Hilfspunkt durch einen Farbpunkt auf einem Gestell markiert sein, welches zur Durchführung des erfindungsgemäßen Verfahrens in Reichweite des Roboters ortsfest aufgestellt wird. Der erste und der zweite Hilfspunkt können insbesondere miteinander identisch gewählt werden.

Die Reihenfolge der einzelnen Verfahrensschritte ist nicht zwingend; vielmehr können verschiedene äquivalente Reihenfolgen der einzelnen Verfahrensschritte erfindungsgemäß gewählt werden. Beispielsweise können die Schritte C1) und C2) vor den Schritten B1) bis B3) oder vor den Schritten A1 bis A4) ausgeführt werden.

Gemäß einer Variante werden die Ergebnisse des Verfahrens dazu verwendet, Ungenauigkeiten und Fehler des Roboters auszugleichen. Diese Variante ist insbesondere dann relevant, wenn redundante Messergebnisse vorliegen. Ein mehrfaches Anfahren der gleichen Punkte erhöht die Genauigkeit der Kalibrierung.

Gemäß einer abweichenden Variante wird im Schritt C3) die Orientierung der Kamera gegenüber dem Merkmal nicht unverändert beibehalten, sondern verändert, indem die Kamera K um eine sowohl zur Verschieberichtung als auch zur optischen Achse der Kamera K senkrechte Achse geschwenkt wird.

Nach Beendigung der automatischen Kalibrierung ist die exakte Position und Orientierung der Kamera in jeder Stellung des Kamerahalters im Bezug zum Roboter bekannt bzw. abfragbar.

Gemäß einer Variante werden bei einem erfindungsgemäßen Verfahren zur Kalibrierung eines Roboters oder eines Werkzeugs, wie Greifhand, eines Roboters in Bezug auf eine mit dem Roboter, insbesondere dessen Greifhand, fest bzw. starr verbundene Kamera, die mit einer digitalen Bildverarbeitung zusammenarbeitet, um anschließend für das Werkzeug des Roboters die Position eines Objekts oder Werkstücks unter Verwendung wenigstens einer dergestalt kalibrierten Kamera bestimmen und anfahren zu können, folgende Schritte durchgeführt:
(1) auf die Kamera wird als Kalibriertool eine erste Spitze aufgesetzt und diese Spitze eingemessen, wodurch drei Freiheitsgrade X,Y,Z und damit die Kameraposition bzw. der Nullpunkt festgelegt wird,
(2) auf die Kamera wird nach Abnahme der ersten Spitze eine zweite Spitze aufgesetzt, welche eine von der ersten Spitze unterschiedliche Länge besitzt und in dieselbe Richtung wie die erste Spitze weist, und die zweite Spitze wird ebenfalls eingemessen, wodurch die Stoßrichtung des Roboters durch die Gewinnung von zwei weiteren Freiheitsgraden festgelegt wird; hierbei definiert die Verbindung dieser beiden Toolpositionen die Stoßrichtung (Richtung der Spitze entspricht Richtung der Kamera).
(3) nach Abnahme der zweiten Spitze wird ein Kalibrierobjekt in das Blickfeld der Kamera gelegt und die Kamera in eine erste Position, z.B. Nullposition, gefahren, wonach der Roboter bzw. das Werkzeug nunmehr parallel zur Kameraebene verfahren und die verfahrene, neue Position, zweite Position, an das Bildverarbeitungssystem übertragen wird,
(4) das Bildverarbeitungssystem berechnet die Lage des Kalibrierobjekts in der ersten und in der zweiten Position und ermittelt durch die Berechnung der Lagedifferenz in Verbindung mit den Roboterdaten die Drehung um die Stoßrichtung,
(5) das Ergebnis wird an den Roboter übertragen, welcher damit die Daten des Werkzeugs, Tooldaten, ergänzt, wodurch nunmehr alle sechs Freiheitsgrade definiert sind.

Ein Vorteil des erfindungsgemäßen Verfahrens besteht darin, dass durch dasselbe eine wesentlich genauere Einmessung des Werkzeugs des Roboters erfolgt, als es bei der Tollkalibrierung des Standes der Technik der Fall ist. Ein weiterer Vorteil besteht darin, dass die visuelle, intuitive Ausrichtung des Robotertools (Winkelstellung) des Roboterprogrammierers durch exakter nummerierte Daten, z.B. CAD-Daten, ersetzt werden kann.

Der Schritt (1) definiert den Nullpunkt und legt drei Freiheitsgrade (X,Y,Z) fest, so dass hierdurch die Position der Kamera bekannt ist. Es wird somit über die Spitze ein neues Koordinatensystem aufgebaut. Allerdings ist in diesem Schritt die Orientierung der Kamera noch unbekannt.

Durch den Schritt (2) wird die Stoßrichtung des Roboters definiert, um sicher zu stellen, dass die prinzipielle Ausrichtung bzw. Orientierung der Kamera gewährleistet ist. Die Verbindung der beiden Punkte - die eine Toolposition entspricht dem äußersten Ende der ersten Spitze und die andere Toolposition entspricht dem äußersten Ende der zweiten Spitze - legt die Stoßrichtung fest, wobei zwei weitere Freiheitsgrade gewonnen werden. Nach diesem Schritt ist die Drehung um die Stoßrichtung, welche insbesondere mit der z-Achse des neuen kartesischen Koordinatensystems zusammenfallend gewählt werden kann, noch unbekannt.

Die Berechnung der Verdrehung um diese Stoßrichtung erfolgt durch die Schritte (3), (4) und (5), was durch Zuhilfenahme des Bildverarbeitungssystems der Kamera erfolgen kann. Das hierzu im Schritt (3) verwendete Kalibrierobjekt kann ein beliebiger Körper sein, welcher als Bedingung nur im Blickfeld der Kamera liegen muss, vorzugsweise vollständig im Blickfeld. Zum Verfahren des Roboters parallel zur Kameraebene wird die Kalibrierobjektebene parallel der Kameraebene ausgerichtet. Die Lage des Kalibrierobjekts wird im Kamerabild bestimmt (Position 1). Anschließend wird das Tool bzw. das Werkzeug parallel zur Kameraebene verfahren und die Lage des Kalibrierobjekts im Kamerabild erneut bestimmt (Position 2). Durch die Berechnung der Lagedifferenz zwischen Position 1 und Position 2 wird in Verbindung mit den Roboterkoordinaten (Distanz zwischen Position 1 und Position 2 entspricht dem Verfahrweg) die Verdrehung um die Stoßrichtung ermittelt.

Nach der erneuten Berechnung der Lage des Kalibrierobjekts durch das Bildverarbeitungssystem wird durch die Berechnung der Lagedifferenz in Verbindung mit den Roboterdaten die Drehung um die Stoßrichtung ermittelt, womit die Orientierung der Kamera bekannt ist,

Das Ergebnis wird an den Roboter übertragen, der damit die Daten des Werkzeugs, Tooldaten, ergänzt, wodurch nunmehr alle sechs Freiheitsgrade definiert sind.

Das erfindungsgemäße Verfahren kann vorteilhaft mit Hilfe exakter numerischer Daten, insbesondere CAD-Daten, durchgeführt werden.

Das Roboter-Koordinatensystem kann insbesondere ein kartesisches Koordinatensystem sein; ebenso kann das Kamera-Koordinatensystem insbesondere ein kartesisches Koordinatensystem sein.

Die Erfindung betrifft ein Verfahren zur Kalibrierung eines Roboters oder eines Werkzeugs, wie Greifhand, eines Roboters, in Bezug auf eine mit dem Roboter fest bzw. starr verbundene Kamera, die mit einer digitalen Bildverarbeitung zusammenarbeitet. Auf die Kamera wird gemäß einer bevorzugten Variante der Erfindung als Kalibriertoll eine erste Spitze aufgesetzt und diese Spitze eingemessen, wodurch drei Freiheitsgrad X,Y,Z und damit die Kameraposition bzw. der Nullpunkt festgelegt werden; auf die Kamera wird nach Abnahme der ersten Spitze eine zweite Spitze aufgesetzt, welche eine von der ersten Spitze unterschiedliche Länge besitzt und in dieselbe Richtung wie die erste Spitze weist, wodurch die Stoßrichtung des Roboters durch die Gewinnung von zwei weiteren Freiheitsgraden festgelegt wird; nach Abnahme der zweiten Spitze wird ein Kalibrierobjekt in das Blickfeld der Kamera gelegt und die Kamera in die Position 1 gefahren, wonach der Roboter bzw. das Werkzeug nunmehr parallel zur Kameraebene verfahren und die verfahrene, neue Position 2 an das Bildverarbeitungssystem übertragen wird; das Bildverarbeitungssystem berechnet die Lage des Kalibrierkörpers neu und ermittelt durch die Berechnung der Lagedifferenz Position 1 - Position 2 in Verbindung mit den Roboterdaten die Drehung um die Stoßrichtung; das Ergebnis wird an den Roboter übertragen, welcher damit die Daten des Werkzeugs, Tooldaten, ergänzt, wodurch nunmehr alle sechs Freiheitsgrade definiert sind.

Kurzbeschreibung der Zeichnung, in welcher jeweils schematisch veranschaulichen:
- Fig.1: einen Roboter mit einem Kamerahalter, an welchem eine erste Kalibierspitze starr angeordnet ist, mit welcher ein erster ortsfester Hilfspunkt mehrfach angefahren wird,
- Fig.2: den Roboter von Fig. 1, an welchem anstelle der ersten eine zweite Kalibierspitze starr angeordnet ist, mit welcher ein zweiter ortsfester Hilfspunkt mehrfach angefahren wird,
- Fig.3: den Endbereich des Kamerahalters des Roboters von Fig. 1 mit daran starr angeordneter zweiter Kalibrierspitze, wobei der Roboter nicht dargestellt ist und wobei die zuvor an dem Kamerahalter angeordnete erster Kalibierspitze zum Vergleich gestrichelt dargestellt ist,
- Fig.4: den Roboter von Fig. 1 mit daran angeordneter Kamera in zwei verschiedenen Stellungen, wovon eine durchgezogen und die andere gestrichelt dargestellt ist, wobei die Kamera jeweils ein Merkmal erfasst und abbildet,
- Fig. 5: die Bildebene der Kamera von Fig. 4 mit eingezeichneter Lage der Bilder des Merkmals in den beiden in Fig. 4 dargestellten Stellungen des Roboters,
- Fig. 6: die Bestimmung der Toolposition, jedoch ohne Richtung,
- Fig. 7: die Bestimmung der Stoßrichtung, und
- Fig. 8: die Bestimmung der Verdrehung um die Stoßrichtung.

Das erfindungsgemäße Verfahren dient zur genauen Einmessung eines Kamera-Koordinatensystems, welches im folgenden mit KKS abgekürzt wird und auf eine Kamera K bezogen ist, gegenüber einem Roboter-Koordinatensystem, welches im folgenden mit RKS abgekürzt wird und auf einen Roboter R bezogen ist. Der Roboter R weist einen beweglichen Kamerahalter W auf, dessen Lage und Orientierung - wie im Stand der Technik üblich - im RKS jederzeit abfragbar sind.

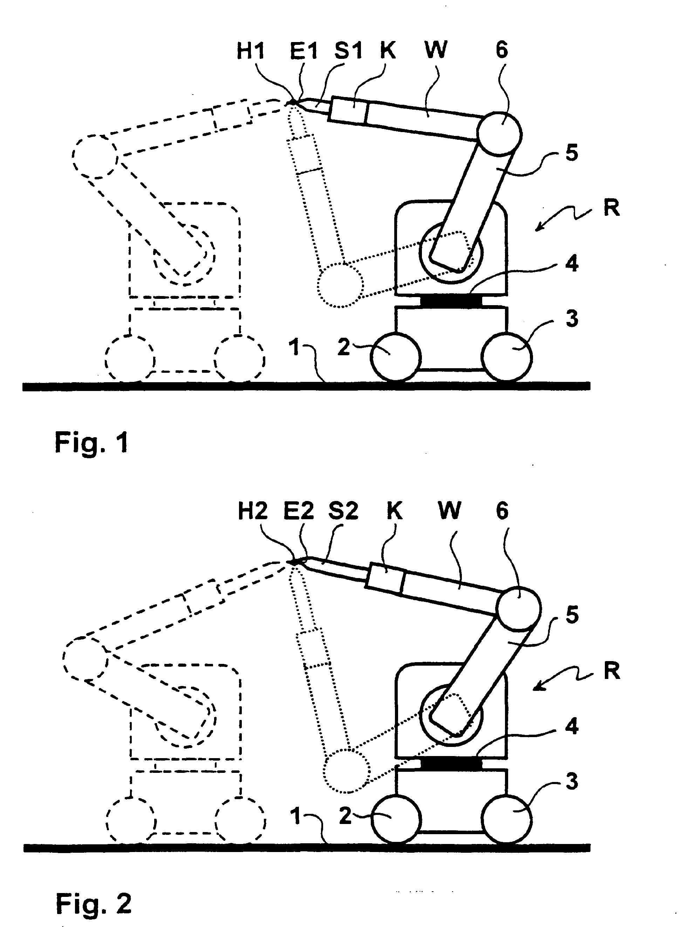

Zunächst wird auf Fig. 1 Bezug genommen, welche zur Veranschaulichung der durchzuführenden Verfahrensschritte A1) bis A4) dient. Fig. 1 zeigt einen Roboter R mit einem schwenkbaren Arm 5, an welchem über ein Gelenk 6 ein Kamerahalter W angeordnet ist. Dieser ist gegenüber dem Arm 5 mittels des Gelenks 6 seinerseits schwenkbar. Der Roboter R ist mittels Rädern 2,3 auf einer Schiene 1 translatorisch verfahrbar und weist eine Drehplatte 4 auf, mittels welcher der obere Teil des Roboters R samt Arm 5, Gelenk 6 und Kamerahalter W um die Vertikalachse des Roboters R gegenüber der Schiene 1 drehbar ist.

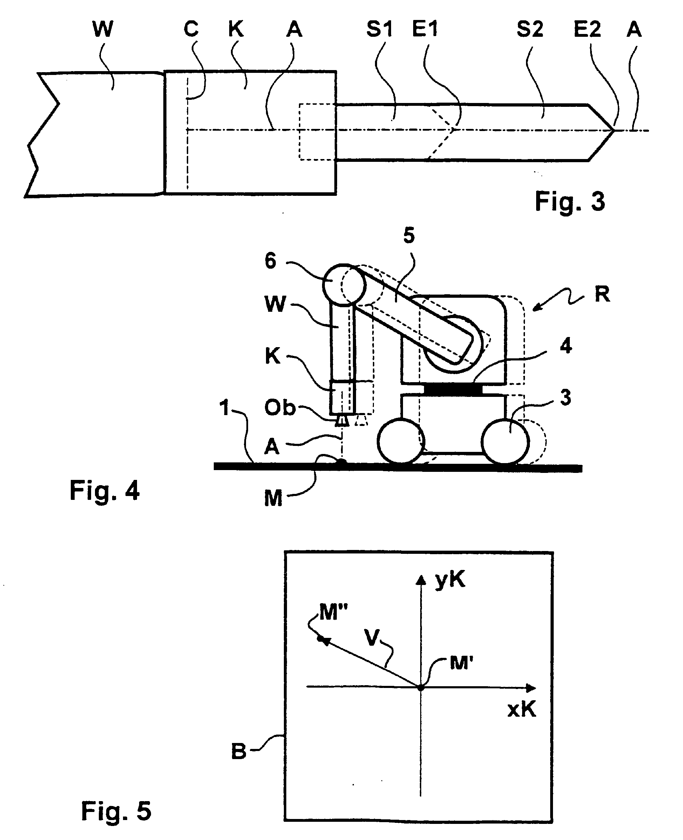

Die Kamera K ist an dem vom Roboter R abgewandten Endbereich des Kamerahalters W starr angeordnet und somit eine "Handkamera" des Roboters R, welche z.B. zur Erfassung und Abbildung schwer einsehbarer Bereiche eines Werkstücks dient. Die Kamera K ist im vorliegenden Beispiel eine elektronische Kamera K mit einem abnehmbaren Objektiv Ob (Fig. 4), in deren Bildebene B ein CCD-Chip C angeordnet ist (Fig. 3).

Das KKS ist im Beispiel der Figuren 1 bis 5 ein kartesisches Koordinatensystem und so gewählt, dass sein Ursprung in der Bildebene B der Kamera K liegt und seine z-Achse mit der optischen Achse A der Kamera K zusammenfällt. Die x-Achse xK und die y-Achse yK des KKS verlaufen daher beide in der Bildebene B (Fig. 5). Die Orientierung der Bildebene B im KKS ist somit bekannt.

Im Schritt A1) wird anstelle des Objektivs Ob an der Kamera K ein erster Kalibrierkörper S1 starr angeordnet, so dass dieser über die Kamera K starr an dem Kamerahalter W angeordnet ist. Im Beispiel von Fig. 1 ist der erste Kalibrierkörper S1 eine erste Kalibrierspitze S1 mit einem vom Kamerahalter W abgewandten spitz zulaufenden äußersten Ende E1, welches auf der optischen Achse A der Kamera K und damit auf der z-Achse des KKS liegt. Mit optischer Achse A der Kamera K ist hierbei die optische Achse A des Objektivs Ob gemeint, wenn dieses anstelle der ersten Kalibrierspitze S1 an der Kamera K angeordnet ist.

Im Schritt A2) wird auf der ersten Kalibrierspitze S1deren äußerstes Ende E1 als erster Referenzpunkt E1 gewählt, dessen Lage im KKS bekannt ist; nötigenfalls wird die Lage des äußersten Endes E1 gegenüber der Kamera K mit bekannten Methoden vor, während oder nach Durchführung des erfindungsgemäßen Verfahrens vermessen.

Im Schritt A3) wird die Lage des ersten Referenzpunktes E1 in Bezug auf den Kamerahalter W bestimmt. Hierbei wird bevorzugt vorgegangen wie folgt:
Unterschritt a1): der Roboter R wird so gesteuert, dass das äußerste Ende E1 der ersten Kalibrierspitze S1 einen beliebigen ortsfesten ersten Hilfspunkt H1 anfährt, wobei der Kamerahalter W nach Erreichen des ersten Hilfspunktes H1 im RKS eine bestimmte Lage und Orientierung aufweist, welche abgefragt werden. Der sich in dieser Lage und Orientierung befindende Kamerahalter W ist in Fig. 1 durchgezogen eingezeichnet.
Unterschritt a2): anschließend wird der Roboter R so gesteuert, dass das äußerste Ende E1 der ersten Kalibrierspitze S1 wiederum den ersten Hilfspunkt H1 anfährt, wobei der Kamerahalter W nach Erreichen des ersten Hilfspunktes H1 im Roboter-Koordinatensystem RKS gegenüber dem Unterschritt a1) eine andere Lage und Orientierung aufweist, welche ebenfalls abgefragt werden. Der sich in dieser Lage und Orientierung befindende Kamerahalter W ist in Fig. 1 punktiert eingezeichnet.
Unterschritt a3): der Unterschritt a2) wird für mindestens eine gegenüber den Unterschritten a1) und a2) nochmals andere Lage und Orientierung des Kamerahalters W entsprechend erneut ausgeführt. Hierzu wird also der Roboter R mindestens noch einmal so gesteuert, dass das äußerste Ende E1 der ersten Kalibrierspitze S1 wiederum den ersten Hilfspunkt H1 anfährt. Im Beispiel von Fig. 1 wird der Roboter R zu diesem Zweck auf der Schiene 1 translatorisch verfahren; der Roboter R ist an der so erreichten Position in Fig. 1 gestrichelt eingezeichnet. Diesmal weist der Kamerahalter W nach Erreichen des ersten Hilfspunktes H1 im RKS gegenüber den beiden vorhergehend erläuterten Unterschritten a1), a2) eine wiederum andere Lage und Orientierung auf, welche ebenfalls abgefragt werden. Der sich in dieser Lage und Orientierung befindende Kamerahalter W ist in Fig. 1 gestrichelt eingezeichnet.

Optional kann der erste Hilfspunkt H1 zum Zweck der Erhöhung der Genauigkeit noch einmal oder mehrmals erneut angefahren werden, wobei jedes Mal der Kamerahalter W nach Erreichen des ersten Hilfspunktes H1 im RKS gegenüber den beiden vorhergehend erläuterten Unterschritten eine wiederum andere Lage und Orientierung aufweist, welche jeweils wiederum abgefragt werden. Die so erhaltene Redundanz der Ergebnisse kann zur Erhöhung der Genauigkeit des Verfahrens benutzt werden.

Unterschritt b): aus den in den Unterschritten a1) bis a3) gewonnenen Ergebnissen wird die Lage des ersten Hilfspunktes H1 und somit die Lage des äußersten Endes E1 der ersten Kalibrierspitze S1 in Bezug auf den Kamerahalter W berechnet.

Der Schritt A3) besteht somit im vorliegenden Beispiel aus den Unterschritten a1) bis a3) und b).

Im Schritt A4) wird aus dem Vergleich der Lagen des ersten Referenzpunktes E1 im KKS und der Lage dieses Punktes E1 in Bezug auf den Kamerahalter W die Lage des Ursprungs des KKS in Bezug auf den Kamerahalter W bestimmt.

Als nächstes wird die Orientierung des KKS gegenüber dem Kamerahalter W bestimmt. Hierzu werden erfindungsgemäß die Schritte B1) bis D) ausgeführt:
Schritt B1): die erste Kalibrierspitze S1 wird von der Kamera K abgenommen; anstelle der ersten Kalibrierspitze S1 wird eine zweite Kalibrierspitze S2 starr an der Kamera K angeordnet (Fig. 2). Im Beispiel von Fig. 2 besitzt die zweite Kalibrierspitze S2 ein vom Kamerahalter W abgewandtes spitz zulaufendes äußerstes Ende E2, welches ebenfalls auf der optischen Achse A der Kamera K und daher auf der z-Achse des KKS liegt.
Schritt B2): auf der zweiten Kalibrierspitze S2 wird deren äußerstes Ende E2 als zweiter Referenzpunkt E1 gewählt, dessen Lage im KKS bekannt ist; nötigenfalls wird die Lage des äußersten Endes E2 gegenüber der Kamera K mit bekannten Methoden vor, während oder nach Durchführung des erfindungsgemäßen Verfahrens vermessen.
Im Schritt B3) wird die Lage des zweiten Referenzpunktes E2 in Bezug auf den Kamerahalter W bestimmt. Hierbei wird bevorzugt ein zweiter ortsfester Hilfspunkt H2 gewählt (Fig. 2), welcher völlig analog zu den oben erläuterten Unterschritten a1) bis a3) mindestens dreimal mit dem äußersten Ende E2 angefahren wird:
   Im Unterschritt c1) wird der Roboter R wird so gesteuert, dass das äußerste Ende E2 der zweiten Kalibrierspitze S2 den zweiten Hilfspunkt H2 anfährt, wobei der Kamerahalter W nach Erreichen des zweiten Hilfspunktes H2 im Roboter-Koordinatensystem RKS eine bestimmte Lage und Orientierung aufweist, welche abgefragt werden. Der sich in dieser Lage und Orientierung befindende Kamerahalter W ist in Fig. 2 durchgezogen eingezeichnet.
   Anschließend wird der Roboter R im unterschritt c2) so gesteuert, dass das äußerste Ende E2 der zweiten Kalibrierspitze S2 wiederum den zweiten Hilfspunkt H2 anfährt, wobei der Kamerahalter W nach Erreichen des zweiten Hilfspunktes H2 im Roboter-Koordinatensystem RKS gegenüber dem Schritt c1) eine andere Lage und Orientierung aufweist, welche ebenfalls abgefragt werden. Der sich in dieser Lage und Orientierung befindende Kamerahalter W ist in Fig. 1 punktiert eingezeichnet.
   Im Unterschritt c3) wird der Schritt c2) wird für mindestens eine gegenüber den Schritten c1) und c2) nochmals andere Lage und Orientierung des Kamerahalters W entsprechend erneut ausgeführt. Im Beispiel von Fig. 2 wird der Roboter R zu diesem Zweck auf der Schiene 1 translatorisch verfahren; der Roboter R ist an der so erreichten Position in Fig. 2 gestrichelt eingezeichnet.

Ein translatorisches Verfahren des Roboters R ist zur Durchführung der Unterschritte a1) bis a3) bzw. c1) bis c3) nicht zwingend erforderlich, sofern der Roboter R genügend Freiheitsgrade besitzt, um den ersten Hilfspunkt H1 bzw. den zweiten Hilfspunkt H2 mit der ersten Kalibrierspitze S1 bzw. mit der zweiten Kalibrierspitze S2 ohne translatorisches Verfahren des Roboters R in der genannten Weise dreimal anzufahren, was bei handelsüblichen Robotern in der Regel der Fall ist. Beispielsweise könnte der Roboter R von Fig. 1 bzw. Fig. 2 hierbei jeweils alternativ von seiner Möglichkeit Gebrauch machen, sein Oberteil mit Hilfe der Drehplatte 4 um eine zur Schiene 1 senkrechte Achse zu drehen.

Im Unterschritt d) wird aus den in den Schritten c1) bis c3) gewonnenen Ergebnissen in Analogie zum oben erläuterten Unterschritt b) die Lage des zweiten Hilfspunktes H2 und somit die Lage des äußersten Endes E2 der zweiten Kalibrierspitze S2 in Bezug auf den Kamerahalter W berechnet.

Der Schritt B3) besteht somit im vorliegenden Beispiel aus den Unterschritten c1) bis c3) und d).

Um das Anfahren de Hilfspunkte H1, H2 zu erleichtern, kann deren Lage durch je eine ortsfeste Markierung markiert werden. Insbesondere können die beiden Hilfspunkte H1, H2 miteinander identisch sein.

Da nun die Lagen der beiden Referenzpunkte E1, E2 in Bezug auf den Kamerahalter W bestimmt sind und diese auf der z-Achse des KKS gewählt wurden, ist somit die Richtung der z-Achse des KKS in Bezug auf den Kamerahalter W bekannt bzw. unmittelbar bestimmbar, da die z-Achse des KKS durch die beiden Referenzpunkte E1,E2 festgelegt ist.

Im folgenden wird in den Schritten C1) bis D) die Richtung der restlichen Achsen xK, yK des KKS bezüglich des Kamerahalters W bestimmt.

Im Schritt C1) wird die zweite Kalibrierspitze S2 von der Kamera abgenommen und das Objektiv Ob an der Kamera K abgebracht und sodann mit der Kamera K mit Hilfe des Objektivs Ob ein beliebiges Merkmal M eines Objekts erfasst und abgebildet, so dass das Bild des Merkmals M in der Bildebene B der Kamera K eine erste Lage M' einnimmt (Fig. 5). Die hierbei vom Roboter R und von der Kamera K eingenommene Stellung ist im Beispiel von Fig. 4 durchgezogen dargestellt. Vorzugsweise wird die Kamera K hierbei so positioniert, dass die erste Lage M' mit dem Ursprung des KKS zusammenfällt (Fig. 5). Das Merkmal M kann z.B. eine auf der Schiene 1 angebrachte farbige Markierung sein.

Im Schritt C2) wird die Orientierung des Kamerahalters W im RKS abgefragt. Dieser Schritt kann alternativ vordem Schritt C1) oder nach dem Schritt C3) ausgeführt werden.

Im Schritt C3) wird der Roboter R ohne Veränderung der Orientierung der Kamera K gegenüber dem Merkmal M so gesteuert, dass der Kamerahalter W und somit die Kamera K in einer zur Bildebene B der Kamera K nicht senkrechten, im RKS bekannten Verschieberichtung um eine bestimmte Strecke verschoben werden, so dass sich das Merkmal M gegenüber der Kamera K verschiebt und das Bild des Merkmals M in der zweidimensionalen Bildebene B der Kamera K eine zweite Lage M" einnimmt (Fig. 5).

Im Beispiel von Fig. 4 wird der Roboter R hierzu ohne Relativbewegung zwischen Kamera K und Roboter R translatorisch verfahren. Die nun vom Roboter R und von der Kamera K eingenommene Stellung ist im Beispiel von Fig. 4 gestrichelt dargestellt. Die zweite Lage M" befindet von der ersten Lage M' aus gesehen am Zielpunkt eines Ortsvektors V, dessen Richtung die Richtung der Projektion der Verschieberichtung auf die Bildebene B der Kamera K im KKS angibt. Der Ortsvektor V gibt somit den Lageunterschied V zwischen der ersten und der zweiten Lage M',M" im KKS an.

Im Schritt C4) werden die Ergebnisse der Schritte C1) und C3) ausgewertet, indem aus dem Lageunterschied V zwischen der ersten und der zweiten Lage M',M" in der Bildebene B der Kamera die Richtung der Projektion der Verschieberichtung auf die Bildebene B der Kamera K im KKS bestimmt wird.

Im Schritt D) wird die Orientierung der Achsen xK und yK in Bezug auf den Kamerahalter W aus der Verschieberichtung im RKS und den Ergebnissen der Schritte C2) und C4) bestimmt. Das Ergebnis des Schrittes C2) wird hierbei dazu benutzt, die Verschieberichtung vom RKS auf den Kamerahalter W umzurechnen, so dass aus dem Vergleich der Verschieberichtung im RKS und der Richtung ihrer Projektion auf die Bildebene B im KKS die Orientierung der Achsen xK und yK in Bezug auf den Kamerahalter W folgt.

Somit ist nun die Kamera K gegenüber dem Kamerahalter W eingemessen, was sich in den Ergebnissen der Schritte A4) und D) ausdrückt. Mit Hilfe dieser Ergebnisse kann nun für jede beliebige Lage und Orientierung des Kamerahalters W nach vorhergehender Abfrage der Lage und Orientierung des Kamerahalters W im RKS (Schritt E) das KKS sofort auf das RKS umgerechnet werden (Schritt F), womit das Ziel der Erfindung erreicht ist.

Die Lagen M', M" der Bilder des Merkmals M in der zweidimensionalen Bildebene B der Kamera K können insbesondere durch ein automatisch arbeitendes Bildverarbeitungsprogramm bestimmt werden.

Die Koordinatensysteme KKS und RKS können jeweils prinzipiell beliebig orientiert sein, und ihre Ursprünge können jeweils eine beliebige Lage aufweisen. Daher braucht die z-Achse des KKS nicht zwingend mit der optischen Achse A der Kamera K zusammenzufallen. Ferner brauchen die Koordinatensysteme RKS und KKS jeweils nicht zwingend kartesische Koordinatensysteme zu sein.

Fig. 3 dient zum Vergleich der jeweils auf den Kamerahalter W bezogenen Lagen der beiden Referenzpunkte E1, E2. Die Kamera K ist bevorzugt eine solche, auf welche das Objektiv Ob (Fig. 4) aufschraubbar ist.

Gemäß Schritt A1) und A2) wird zunächst die erste Kalibrierspitze S1 an der Kamera K angeordnet, wobei das äußerste Ende E1 der ersten Kalibrierspitze S1 gemäß einer bevorzugten Variante der Erfindung auf der optischen Achse A der Kamera K liegt und als erster Referenzpunkt E1 dient. Um die erste Kalibrierspitze S1 in dieser Weise starr haltern zu können, ist das Objektiv der Kamera K abgeschraubt und an seiner Stelle die erste Kalibrierspitze S1 auf die Kamera K z.B. aufgeschraubt; der hierbei in die Kamera K hineinragende Teil der Kalibrierspitze S1 ist in Fig. 3 gepunktet dargestellt. Die erste Kalibrierspitze S1 ist in Fig. 3 zur Unterscheidung von der später anstelle derselben anzuordnenden zweiten Kalibrierspitze S2 gestrichelt dargestellt.

Nach Ausführung der Schritte A1) bis A4) wird gemäß den Schritten B1) und B2) die erste Kalibrierspitze S1abgeschraubt und an ihrer Stelle die zweite Kalibrierspitze S2 auf die Kamera K aufgeschraubt, wobei das äußerste Ende E2 der zweiten Kalibrierspitze S1 weiter von der Kamera K entfernt ist als zuvor der erste Referenzpunkt E1, gemäß einer bevorzugten Variante der Erfindung ebenfalls auf der optischen Achse A der Kamera K liegt und als zweiter Referenzpunkt E2 dient.

Bei Applikationen mit Roboterhandkameras ist es dringend erforderlich die Kamera auf Roboterseite einzumessen, und zwar genauer wie es die normale Tooleinmessung am Roboter es vorsieht.

Standardmäßig ist der Roboter nach der Toolkalibrierung in der Lage, Punkte im Raum mit dem Tool genau anzufahren. Jedoch nimmt er dabei keine Rücksicht auf die Position der Achsen, was zur Folge hat, dass die Richtung aus welcher der Punkt angefahren wird willkürlich ist, bzw. nur der visuellen Kontrolle des Roboterprogrammierers unterliegt. Für das Kamerasystem ist es jedoch wichtig, die Position der Kamera im Raum auch bzgl. Der Winkelstellungen zu kennen, bzw. diese dem Roboter vorzugeben. Dazu erfordert es die Erweiterung der Toolkalibrierung, um alle Freiheitsgrade bestimme zu können.

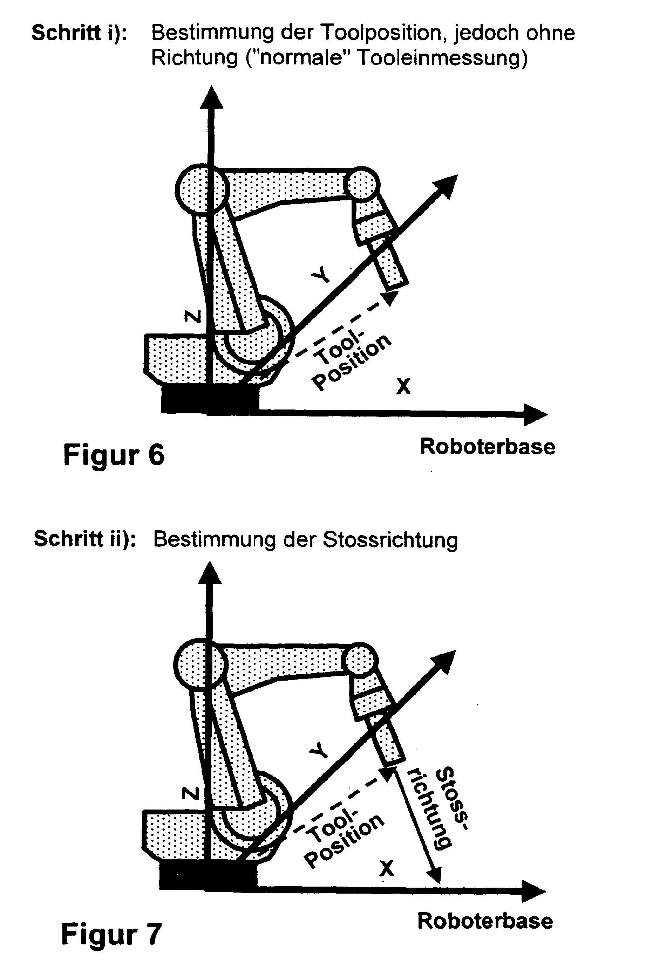

Schritt i), Figur 6: Auf die Kamera wird eine Spitze aufgeschraubt, die nach dem gleichen Verfahren wie ein normales Tool eingemessen wird. Dadurch werden drei Freiheitsgrade festgelegt (X,Y,Z).

Schritt ii), Figur 7: Zuerst muss die Stoßrichtung des Tools/Roboters definiert werden, um sicher zu stellen, dass die prinzipielle Ausrichtung der Kamera gewährleistet ist. Dass erweitert die Tooldaten von den bisher bekannten 3 Freiheitsgraden auf 5. Hierzu wird die Spitze durch eine zweite Spitze unterschiedlicher Länger ersetzt. Schritt 1 wird hier äquivalent ausgeführt. Die Verbindung beider Punkte legt die Stoßrichtung fest. Damit sind zwei weitere Freiheitsgrade festgelegt.

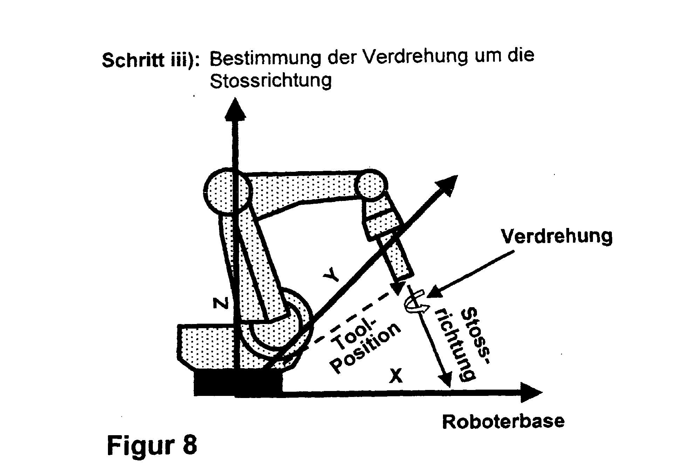

Schritt iii), Figur 8: Offen bleibt die Verdrehung um dies Stoßrichtung, die unter zur Hilfenahme des Bildverarbeitungssystem bestimmt werden kann. Dazu wird ein Kalibrierkörper in eine geeignete Kameraposition gelegt und unter dem Roboter in Kameraposition NULL gefahren. Anschließend fährt der Roboter parallel zur Kameraebene und überträgt die verfahrene Position an das Bildverarbeitungssystem. Das BV-System berechnet die Lage des Kalibrierkörpers neu und kann nun durch die Lagedifferenz in Kombination mit den Roboterdaten die Drehung um die Stoßrichtung ermitteln. Dieses Ergebnis wird nun an den Roboter übertragen, der damit seine Tooldaten ergänzt und nun alle sechs Freiheitsgrade definiert hat.

### Gewerbliche Anwendbarkeit:

Die Erfindung ist gewerblich anwendbar z.B. im Bereich der industriellen Fertigungstechnik und in der Prozessautomation.

### Liste der Bezugszeichen:

- 1: Schiene
- 2,3: Räder
- 4: Drehplatte
- 5: Arm
- 6: Gelenk
- B: zweidimensionale Bildebene von K
- C: CCD-Chip von K
- E1, E2: äußerstes Ende von S1, S2
- H1, H2: ortsfeste Hilfspunkte
- K, W: Kamera und Kamerahalter
- M: Merkmal
- M',M": Lage der Bilder von M in B
- Ob: Objektiv von K
- R: Roboter
- S1, S2: erster, zweiter Kalibrierkörper
- V: Lageunterschied zwischen M' und M" bzw. Vektor von M' nach M"
- XK: x-Achse des Kamera-Koordinatensystems
- YK: y-Achse des Kamera-Koordinatensystems

## Patentansprüche

1. Verfahren zur genauen Einmessung eines Kamera-Koordinatensystems (KKS) einer Kamera (K), welche an einem Kamerahalter (W) starr angeordnet ist, gegenüber einem Roboter-Koordinatensystem (RKS) eines Roboters (R), oder umgekehrt, wobei der Kamerahalter (W) an dem Roboter (R) angeordnet ist und die Lage und Orientierung des Kamerahalters (W) im Roboter-Koordinatensystem (RKS) jederzeit abfragbar sind und die Orientierung der Bildebene (B) der Kamera (K) im Kamera-Koordinatensystem (KKS) bekannt ist, mit folgenden Schritten:
A1) an dem Kamerahalter (W) wird ein erster Kalibrierkörper (S1) starr angeordnet, wobei das Verfahren durch die folgendenSchritte **gekennzeichnet** ist.
A2) auf oder in dem ersten Kalibrierkörper (S1) wird ein bestimmter erster Referenzpunkt (E1) gewählt, dessen Lage im Kamera-Koordinatensystem (KKS) bekannt ist,
A3) die Lage des ersten Referenzpunktes (E1) wird in Bezug auf den Kamerahalter (W) bestimmt,
A4) aus dem Vergleich der Lagen des ersten Referenzpunktes (E1) im Kamera-Koordinatensystem (KKS) und in Bezug auf den Kamerahalter (W) wird die Lage des Ursprungs des Kamera-Koordinatensystems (KKS) in Bezug auf den Kamerahalter (W) bestimmt,
B1) an dem Kamerahalter (W) wird ein zweiter Kalibrierkörper (S2) starr angeordnet,
B2) auf oder in dem zweiten Kalibrierkörper (S2) wird mindestens ein bestimmter zweiter Referenzpunkt (E2) gewählt welcher einen anderen Abstand von der Kamera (K) aufweist als der erste Referenzpunkt (E1) und dessen Lage im Kamera-Koordinatensystem (KKS) ebenfalls bekannt ist oder wobei die Richtung der Verbindungslinie zwischen dem ersten und dem zweiten Referenzpunkt (E1,E2) im Kamera-Koordinatensystem (KKS) bekannt ist,
B3) Lage des zweiten Referenzpunktes (E2) wird in Bezug auf den Kamerahalter (W) bestimmt,
C1) mit der Kamera (K) wird ein beliebiges Merkmal (M) eines Objekts erfasst und abgebildet, so dass das Bild des Merkmals (M) in der Bildebene (B) der Kamera (K) eine erste Lage (M') einnimmt,
C2) die Orientierung des Kamerahalters (W) im Roboter-Koordinatensystem (RKS) wird abgefragt,
C3) der Roboter (R) wird ohne Veränderung der Orientierung der Kamera (K) gegenüber dem Merkmal (M) so gesteuert, dass der Kamerahalter (W) und somit die Kamera (K) in einer zur Bildebene (B) der Kamera (K) nicht senkrechten, im Roboter-Koordinatensystem (RKS) bekannten Verschieberichtung gegenüber dem Merkmal (M) um eine bestimmte Strecke verschoben werden, so dass das Bild des Merkmals (M) in der Bildebene (B) der Kamera (K) eine zweite Lage (M") einnimmt,
C4) aus dem Lageunterschied (V) zwischen der ersten und der zweiten Lage (M',M") in der Bildebene (B) der Kamera wird die Richtung der Projektion der Verschieberichtung auf die Bildebene (B) der Kamera (K) im Kamera-Koordinatensystem (KKS) bestimmt,
D) die Orientierung des Kamera-Koordinatensystems (KKS) in Bezug auf den Kamerahalter (W) wird bestimmt aus
- der Richtung der Verbindungslinie des ersten und des zweiten Referenzpunktes (E1,E2) in Bezug auf den Kamerahalter (W),
- der Verschieberichtung im Roboter-Koordinatensystem (RKS) und
- den Ergebnissen der Schritte C2) und C4),
E) Lage und Orientierung des Kamerahalters (W) im Roboter-Koordinatensystem (RKS) werden abgefragt,
F) aus dem Ergebnissen der Schritte A4), D) und E) werden entweder die Lage und Orientierung des Kamera-Koordinatensystems (KKS) im Roboter-Koordinatensystem (RKS) bestimmt oder umgekehrt.

2. Verfahren nach Anspruch 1, **dadurch gekennzeichnet, dass** der Schritt B1) weggelassen und anstelle des Schrittes B2) folgender Schritt ausgeführt wird:
B2') auf oder in dem ersten Kalibrierkörper (S1) wird ein bestimmter zweiter Referenzpunkt (E2) gewählt, welcher einen anderen Abstand von der Kamera aufweist als der erste Referenzpunkt und dessen Lage im Kamera-Koordinatensystem (KKS) ebenfalls bekannt ist oder wobei die Richtung der Verbindungslinie zwischen dem ersten und dem zweiten Referenzpunkt (E1,E2) im Kamera-Koordinatensystem (KKS) bekannt ist.

3. Verfahren nach Anspruch 1 oder 2, **dadurch gekennzeichnet,**
**dass** im Schritt C2) die relative Orientierung zwischen der Kamera (K) und dem Roboter (R) nicht verändert wird.

4. Verfahren nach Anspruch 3, **dadurch gekennzeichnet,**
**dass** der Roboter (R) zur Durchführung des Schrittes C2) linear verfahren wird.

5. Verfahren nach einem der Ansprüche 1 bis 4, **dadurch gekennzeichnet,**
**dass** der erste und der zweite Referenzpunkt (E1,E2) so gewählt werden, dass ihre Verbindungslinie zur optischen Achse (A) der Kamera (K) parallel verläuft.

6. Verfahren nach Anspruch 5, **dadurch gekennzeichnet,**
**dass** der erste und der zweite Referenzpunkt (E1,E2) jeweils auf der optischen Achse (A) der Kamera (K) gewählt werden.

7. Verfahren nach einem der Ansprüche 1 bis 6, **dadurch gekennzeichnet,**
**dass** als Kamera-Koordinatensystem (KKS) ein kartesisches Koordinatensystem (KKS) gewählt wird, dessen z-Achse zur optischen Achse (A) der Kamera (K) parallel verläuft.

8. Verfahren nach einem der Ansprüche 1 bis 7, **dadurch gekennzeichnet,**
**dass** der Ursprung des Kamera-Koordinatensystems (KKS) auf der optischen Achse (A) der Kamera (K) gewählt wird.

9. Verfahren nach einem der Ansprüche 1 bis 8, **dadurch gekennzeichnet,**
**dass** der Ursprung des Kamera-Koordinatensystems (KKS) in der Bildebene (B) der Kamera (K) gewählt wird.

10. Verfahren nach einem der Ansprüche 1 bis 9, **dadurch gekennzeichnet,**
**dass** anstelle des Schrittes C3) das Merkmal (M) entgegen der Verschieberichtung um die bestimmte Strecke verschoben wird, so dass das Bild des Merkmals (M) in der Bildebene (B) der Kamera (K) die zweite Lage (M") einnimmt.

11. Verfahren nach einem der Ansprüche 1 bis 10, **dadurch gekennzeichnet,**
**dass** die z-Achse des Roboter-Koordinatensystems (RKS) vertikal verläuft und die Verschieberichtung horizontal gewählt wird.

12. Verfahren nach einem der Ansprüche 1 bis 11, **dadurch gekennzeichnet,**
**dass** die Verschieberichtung parallel zur x-y-Ebene des Roboter-Koordinatensystems (RKS) gewählt wird.

13. Verfahren nach einem der Ansprüche 1 bis 12, **dadurch gekennzeichnet,**
**dass** im Schritt B1) der erste Kalibrierkörper (S1) von dem Kamerahalter (W) abgenommen und danach der zweite Kalibrierkörper (S2) anstelle des ersten Kalibrierkörpers (S1) starr an dem Kamerahalter (W) angeordnet wird.

14. Verfahren nach Anspruch 6 und 13, **dadurch gekennzeichnet, dass**
- im Schritt A1) das Objektiv der Kamera (K) von der Kamera (K) abgenommen und der erste Kalibrierkörper (S1) anstelle des Objektivs an der Kamera (K) starr angeordnet wird.
- und im Schritt B1) der zweite Kalibrierkörper (S2) anstelle des ersten Kalibrierkörpers (S1) starr an der Kamera (K) angeordnet wird.

15. Verfahren nach einem der Ansprüche 1 bis 14, **dadurch gekennzeichnet,**
**dass** als erster Kalibrierkörper (S1) eine erste Kalibrierspitze (S1) verwendet und als erster Referenzpunkt (E1) das äußerste Ende (E1) der ersten Kalibrierspitze (S1) gewählt wird, wobei im Schritt A3) die Lage des ersten Referenzpunktes (E1) in Bezug auf den Kamerahalter (W) ermittelt wird wie folgt:
a1) der Roboter (R) wird so gesteuert, dass das äußerste Ende (E1) der ersten Kalibrierspitze (S1) einen beliebigen ortsfesten ersten Hilfspunkt (H1) anfährt, wobei der Kamerahalter (W) nach Erreichen des ersten Hilfspunktes (H1) im Roboter-Koordinatensystem (RKS) eine bestimmte Lage und Orientierung aufweist, welche abgefragt werden,
a2) anschließend wird der Roboter (R) so gesteuert, dass das äußerste Ende (E1) der ersten Kalibrierspitze (S1) wiederum den ersten Hilfspunkt (H1) anfährt, wobei der Kamerahalter (W) nach Erreichen des ersten Hilfspunktes (H1) im Roboter-Koordinatensystem (RKS) gegenüber dem Schritt a1) eine andere Lage und Orientierung aufweist, welche ebenfalls abgefragt werden,
a3) der Schritt a2) wird für mindestens eine gegenüber den Schritten a1) und a2) nochmals andere Lage und Orientierung des Kamerahalters (W) entsprechend erneut ausgeführt,
b) und aus den in den Schritten a1) bis a3) gewonnenen Ergebnissen wird die Lage des ersten Hilfspunktes (H1) und somit die Lage des äußersten Endes (E1) der ersten Kalibrierspitze (S1) in Bezug auf den Kamerahalter (W) berechnet.

16. Verfahren nach einem der Ansprüche 1 bis 15, **dadurch gekennzeichnet, dass** als zweiter Kalibrierkörper (S2) eine zweite Kalibrierspitze (S2) verwendet und als zweiter Referenzpunkt (E2) das äußerste Ende (E2) der zweiten Kalibrierspitze (S2) gewählt wird, wobei im Schritt B3) die Lage des zweiten Referenzpunktes (E2) in Bezug auf den Kamerahalter (W) ermittelt wird wie folgt:
c1) der Roboter (R) wird so gesteuert, dass das äußerste Ende (E2) der zweiten Kalibrierspitze (S2) einen beliebigen ortsfesten zweiten Hilfspunkt (H2) anfährt, wobei der Kamerahalter (W) nach Erreichen des zweiten Hilfspunktes (H2) im Roboter-Koordinatensystem (RKS) eine bestimmte Lage und Orientierung aufweist, welche abgefragt werden,
c2) anschließend wird der Roboter (R) so gesteuert, dass das äußerste Ende (E2) der zweiten Kalibrierspitze (S2) wiederum den zweiten Hilfspunkt (H2) anfährt, wobei der Kamerahalter (W) nach Erreichen des zweiten Hilfspunktes (H2) im Roboter-Koordinatensystem (RKS) gegenüber dem Schritt c1) eine andere Lage und Orientierung aufweist, welche ebenfalls abgefragt werden,
c2) der Schritt c2) wird für mindestens eine gegenüber den Schritten c1) und c2) nochmals andere Lage und Orientierung des Kamerahalters (W) entsprechend erneut ausgeführt,
d) und aus den in den Schritten c1) bis c3) gewonnenen Ergebnissen wird die Lage des zweiten Hilfspunktes (H2) und somit die Lage des äußersten Endes (E2) der zweiten Kalibrierspitze (S2) in Bezug auf den Kamerahalter (W) berechnet.

17. Verfahren nach einem der Ansprüche 1 bis 15, **dadurch gekennzeichnet,**
**dass** der Roboter (R) während der Ausführung des Schrittes A3) und/oder während der Ausführung des Schrittes B3) nicht translatorisch verfahren wird.

18. Verfahren nach einem der Ansprüche 1 bis 17, **dadurch gekennzeichnet,**
**dass** der vorbeschriebene Prozess automatisch durchgeführt wird.

19. Verfahren nach Anspruch 15 oder 16, **dadurch gekennzeichnet,**
**dass** zur Erhöhung der Genauigkeit der Einmessung der Schritt a3) mehr als einmal ausgeführt somit der erste Hilfspunkt (H1) mehr als dreimal angefahren wird, und/oder der Schritt c3) mehr als einmal ausgeführt somit der zweite Hilfspunkt (H2) mehr als dreimal angefahren wird.

20. Verfahren nach einem der Ansprüche 15, 16 oder 19,
**dadurch gekennzeichnet, dass** der erste Hilfspunkt (H1) durch eine ortsfeste Markierung markiert wird, und/oder der zweite Hilfspunkt (H2) durch eine ortsfeste Markierung markiert wird.

21. Verfahren nach einem der Ansprüche 15, 16, 19 oder 20,
**dadurch gekennzeichnet, dass** der erste und der zweite Hilfspunkt (H1,H2) miteinander identisch gewählt werden.

22. Verfahren nach einem der Ansprüche 1 bis 21, **dadurch gekennzeichnet,**
**dass** die Schritte C1) und C3) vor den Schritten B1) bis B3) oder vor den Schritten A1 bis A4) ausgeführt werden.

23. Verfahren nach einem der Ansprüche 1 bis 22, **dadurch gekennzeichnet,**
**dass** zur Erfassung der Lagen (M',M") des Bildes des Merkmals (M) in der Bildebene (B) der Kamera (K) ein Bildverarbeitungsprogramm verwendet wird.

24. Verfahren nach einem der Ansprüche 1 bis 23, **dadurch gekennzeichnet,**
**dass** die Ergebnisse des Verfahrens dazu verwendet werden, Ungenauigkeiten und Fehler des Roboters (R) auszugleichen.

25. Verfahren nach einem der Ansprüche 1 bis 24, **dadurch gekennzeichnet,**
**dass** in Abweichung von Anspruch 1 im Schritt C3) die Orientierung der Kamera (K) gegenüber dem Merkmal (M) verändert wird, indem die Kamera (K) um eine sowohl zur Verschieberichtung als auch zur optischen Achse (A) der Kamera (K) senkrechte Achse geschwenkt wird.

26. Verfahren nach einem der Ansprüche 1 bis 25, **dadurch gekennzeichnet,**
**dass** das Verfahren mit Hilfe exakter numerischer Daten, insbesondere CAD-Daten, durchgeführt wird.

27. Verfahren nach einem der Ansprüche 1 bis 26, **dadurch gekennzeichnet, dass**
das Roboter-Koordinatensystem (RKS) und/oder das Kamera-Koordinatensystem (KKS) ein kartesisches Koordinatensystem ist.

## Claims

1. A method for the precise calibration of a camera coordinate system (KKS) of a camera (K) that is arranged rigidly on a camera holder (W), relative to the robot coordinate system (RKS) of a robot (R), or vice versa, whereby the camera holder (W) is arranged on the robot (R) and the position and orientation of the camera holder (W) in the robot coordinate system (RKS) can be queried at any time and the orientation of the image plane (B) of the camera (K) in the camera coordinate system (KKS) is known, whereby the method is **characterized by** the following steps:
A1) a first calibration element (S1) is arranged rigidly on the camera holder (W),
A2) on or in the first calibration element (S1), a specific first reference point (E1) is selected whose position in the camera coordinate system (KKS) is known,
A3) the position of the first reference point (E1) relative to the camera holder (W) is determined,
A4) on the basis of the comparison of the positions of the first reference point (E1) in the camera coordinate system (KKS) and relative to the camera holder (W), the position of the origin of the camera coordinate system (KKS) relative to the camera holder (W) is determined,
B1) a second calibration element (S2) is arranged rigidly on the camera holder (W),
B2) on or in the second calibration element (S2), at least one specific second reference point (E2) is selected that is at a different distance from the camera (K) than the first reference point (E1) and whose position in the camera coordinate system (KKS) is likewise known or whereby the direction of the connecting line between the first and the second reference points (E1, E2) in the camera coordinate system (KKS) is known,
B3) the position of the second reference point (E2) relative to the camera holder (W) is determined,
C1) a random feature (M) of an object is captured with the camera (K) and imaged so that the image of the feature (M) in the image plane (B) of the camera (K) assumes a first position (M'),
C2) the orientation of the camera holder (W) in the robot coordinate system (RKS) is queried,
C3) the robot (R) is controlled without changing the orientation of the camera (K) relative to the feature (M) in such a way that the camera holder (W) and thus the camera (K) are displaced relative to the feature (M) by a certain distance in a displacement direction that is not perpendicular to the image plane (B) of the camera (K) and that is known in the robot coordinate system (RKS), so that the image of the feature (M) assumes a second position (M"),
C4) on the basis of the position difference (V) between the first and second positions (M', M") in the image plane (B) of the camera, the direction of the projection of the displacement direction onto the image plane (B) of the camera (K) in the camera coordinate system (KKS) is determined,
D) the orientation of the camera coordinate system (KKS) relative to the camera holder (W) is determined on the basis of
• the direction of the connecting line between the first and the second reference points (E1, E2) relative to the camera holder (W),
• the displacement direction in the robot coordinate system (RKS) and
• the results of Steps C2) and C4),
E) the position and orientation of the camera holder (W) in the robot coordinate system (RKS) are queried,
F) on the basis of the results of Steps A4), D) and E), the position and orientation of the camera coordinate system (KKS) in the robot coordinate system (RKS) are determined or vice versa.

2. The method according to Claim 1, **characterized in that** Step B1) is dispensed with and, instead of Step B2), the following step is carried out:
B2') on or in the first calibration element (S1), a specific second reference point (E2) is selected that is at a different distance from the camera than the first reference point (E1) and whose position in the camera coordinate system (KKS) is likewise known or whereby the direction of the connecting line between the first and the second reference points (E1, E2) in the camera coordinate system (KKS) is known.

3. The method according to Claim 1 or 2, **characterized in that**, in Step C2), the relative orientation between the camera (K) and the robot (R) is not changed.

4. The method according to Claim 3, **characterized in that** the robot (R) is displaced linearly in order to carry out Step C2).

5. The method according to any of Claims 1 to 4, **characterized in that** the first and the second reference points (E1, E2) are selected in such a way that their connecting line runs parallel to the optical axis (A) of the camera (K).

6. The method according to Claim 5, **characterized in that** the first and the second reference points (E1, E2) are each selected on the optical axis (A) of the camera (K).

7. The method according to any of Claims 1 to 6, **characterized in that**, as the camera coordinate system (KKS), a Cartesian coordinate system (KKS) is selected whose z-axis runs parallel to the optical axis (A) of the camera (K).

8. The method according to any of Claims 1 to 7, **characterized in that** the origin of the camera coordinate system (KKS) is selected on the optical axis (A) of the camera (K).

9. The method according to any of Claims 1 to 8, **characterized in that** the origin of the camera coordinate system (KKS) is selected in the image plane (B) of the camera (K).

10. The method according to any of Claims 1 to 9, **characterized in that**, instead of Step C3), the feature (M) is displaced by the certain distance opposite to the displacement direction so that the image of the feature (M) in the image plane (B) of the camera (K) assumes the second position (M").

11. The method according to any of Claims 1 to 10, **characterized in that** the z-axis of the robot coordinate system (RKS) runs vertically and the displacement direction is selected to be horizontal.

12. The method according to any of Claims 1 to 11, **characterized in that** the displacement direction is selected parallel to the x-y plane of the robot coordinate system (RKS).

13. The method according to any of Claims 1 to 12, **characterized in that**, in Step B1), the first calibration element (S1) is taken off the camera holder (W) and then, instead of the first calibration element (S1), the second calibration element (S2) is arranged rigidly on the camera holder (W).

14. The method according to Claims 6 and 13, **characterized in that**,
• in Step A1), the objective of the camera (K) is taken off the camera (K) and, instead of the objective, the first calibration element (S1) is arranged rigidly on the camera (K),
• and in Step B1), instead of the first calibration element (S1), the second calibration element (S2) is arranged rigidly on the camera (K).

15. The method according to any of Claims 1 to 14, **characterized in that**, as the first calibration element (S1), a first calibration tip (S1) is used and, as the first reference point (E1), the outermost end (E1) of the first calibration tip (S1) is selected, whereby the position of the first reference point (E1) relative to the camera holder (W) is determined in Step A3) as follows:
a1) the robot (R) is controlled in such a way that the outermost end (E1) of the first calibration tip (S1) moves to any desired stationary first auxiliary point (H1), whereby the camera holder (W), after reaching the first auxiliary point (H1) in the robot coordinate system (RKS), has a certain position and orientation, which are queried,
a2) subsequently, the robot (R) is controlled in such a way that the outermost end (E1) of the first calibration tip (S1) once again moves to the first auxiliary point (H1), whereby the camera holder (W), after reaching the first auxiliary point (H1) in the robot coordinate system (RKS), is at a different position and orientation in comparison to Step a1), which are likewise queried,
a3) Step a2) is carried out correspondingly again for a position and orientation of the camera holder (W) that are at least different from that of Steps a1) and a2),
b) and on the basis of the results obtained in Steps a1) to a3), the position of the first auxiliary point (H1) and thus the position of the outermost end (E1) of the first calibration tip (S1) relative to the camera holder (W) are calculated.

16. The method according to any of Claims 1 to 15, **characterized in that** a second calibration tip (S2) is used as the second calibration element (S2), and the outermost end (E2) of the second calibration tip (S2) is selected as the second reference point (E2), whereby the position of the second reference point (E2) relative to the camera holder (W) is determined in Step B3) as follows:
c1) the robot (R) is controlled in such a way that the outermost end (E2) of the second calibration tip (S2) moves to any desired stationary second auxiliary point (H2), whereby the camera holder (W), after reaching the second auxiliary point (H2) in the robot coordinate system (RKS), has a certain position and orientation, which are queried,
c2) subsequently, the robot (R) is controlled in such a way that the outermost end (E2) of the second calibration tip (S2) once again moves to the second auxiliary point (H2), whereby the camera holder (W), after reaching the second auxiliary point (H2) in the robot coordinate system (RKS), is at a different position and orientation in comparison to Step c1), which are likewise queried,
c3) Step c2) is carried out correspondingly again for a position and orientation of the camera holder (W) that is at least different from that of Steps c1) and c2),
d) on the basis of the results obtained in Steps c1) to c3), the position of the second auxiliary point (H2) and thus the position of the outermost end (E2) of the second calibration tip (S2) relative to the camera holder (W) are calculated.

17. The method according to any of Claims 1 to 15, **characterized in that**, during the execution of Step A3) and during the execution of Step B3), the robot (R) is not moved translatorily.

18. The method according to any of Claims 1 to 17, **characterized in that**, the process described above is carried out automatically.

19. The method according to Claim 15 or 16, **characterized in that** in order to increase the precision of the calibration, Step a3) is carried out more than once so that the first auxiliary point (H1) is accessed more than three times, and/or Step c3) is carried out more than once so that the second auxiliary point (H2) is accessed more than three times.

20. The method according to any of Claims 15, 16 or 19, **characterized in that**,
the first auxiliary point (H1) is marked by a stationary marking and/or the second auxiliary point (H2) is marked by a stationary marking.

21. The method according to any of Claims 15, 16, 19 or 20, **characterized in that**,
the first and second auxiliary points (H1, H2) are selected so as to be identical to each other.

22. The method according to any of Claims 1 to 21, **characterized in that** Steps C1) and C3) are carried out before Steps B1) to B3) or before Steps A1) to A4).

23. The method according to any of Claims 1 to 22, **characterized in that** an image processing program is used in order to capture the positions (M', M") of the image of the feature (M) in the image plane (B) of the camera (C).

24. The method according to any of Claims 1 to 23, **characterized in that**, the results of the method are used to compensate for imprecisions and errors of the robot (R).

25. The method according to any of Claims 1 to 24, **characterized in that**, diverging from Claim 1, in Step C3), the orientation of the camera (K) is changed relative to the feature (M) **in that** the camera (K) is pivoted around an axis that is perpendicular to the displacement direction as well as to the optical axis (A) of the camera (K).

26. The method according to any of Claims 1 to 25, **characterized in that** the method is carried out using exact numerical data, especially CAD data.

27. The method according to any of Claims 1 to 26, **characterized in that** the robot coordinate system (RKS) and/or the camera coordinate system (KKS) is a Cartesian coordinate system.

## Revendications

1. Procédé pour mesurer avec précision le système de coordonnées d'une caméra (KKS) d'une caméra (K) qui est disposée de façon rigide sur un porte-caméra (W), par rapport à un système de coordonnées du robot (RKS) d'un robot (R) ou vice versa, le porte-caméra (W) étant disposé sur le robot (R) et la position et l'orientation du porte-caméra (W) dans le système de coordonnées du robot (RKS) pouvant être interrogées à tout moment et l'orientation du plan de l'image (B) de la caméra (K) dans le système de coordonnées de la caméra (KKS) étant connue, comportant les étapes suivantes :
A1) Un premier corps de calibrage (S1) est disposé rigidement sur le support de caméra (W), le procédé étant **caractérisé par** les étapes suivantes :
A2) sur ou dans le premier corps de calibrage (S1) est choisi un premier point de référence défini (E1) dont la position est connue dans le système de coordonnées de caméra (KKS),
A3) la position du premier point de référence (E1) est définie par rapport au porte-caméra (W),
A4) à partir de la comparaison des positions du premier point de référence (E1) dans le système de coordonnées d'une caméra (KKS) et par rapport au porte-caméra (W), la position de l'origine du système de coordonnées de caméra (KKS) est déterminée par rapport au porte-caméra (W),
B1) un deuxième corps de calibrage (S2) est disposé rigidement sur le porte-caméra (W),
B2) sur ou dans le deuxième corps de calibrage (S2) est choisi au moins un deuxième point de référence défini (E2) qui présente une autre distance de la caméra (K) que le premier point de référence (E1) et dont la position dans le système de coordonnées d'une caméra (KKS) est également connue, ou la direction de la ligne de jonction entre le premier et le deuxième point de référence (E1, E2) dans le système de coordonnées de caméra (KKS) étant connue,
B3) la position du deuxième point de référence (E2) est définie par rapport au porte-caméra (W),
B3) xune caractéristique distinctive quelconque (M) d'un objet est saisie et reproduite avec la caméra (K), de sorte que l'image de la caractéristique distinctive (M) occupe une première position (M') dans le plan de l'image (B) de la caméra (K),
C2) l'orientation du porte-caméra (W) dans le système de coordonnées du robot (RKS) est interrogée,
C3) le robot (R) est piloté sans modification de l'orientation de la caméra (K) par rapport à la caractéristique distinctive (M), de sorte que le porte-caméra (W) et de ce fait la caméra (K) sont déplacés par rapport à la caractéristique distinctive (M) d'un certain trajet dans une direction de déplacement non verticale par rapport au plan de l'image (B) de la caméra (K), connue dans le système de coordonnées du robot (RKS), de sorte que l'image de la caractéristique distinctive (M) occupe une deuxième position (M") dans le plan de l'image de la caméra,
C4) à partir de la différence de position (V) entre la première et la deuxième position (M', M") dans le plan de l'image (B) de la caméra est défini le sens de projection de la direction de déplacement sur le plan de l'image (B) de la caméra (K) dans le système de coordonnées de caméra (KKS),
D) l'orientation du système de coordonnées de caméra (KKS) par rapport au porte-caméra (W) est définie à partir de
- la direction de la ligne de jonction du premier et du deuxième point de référence (E1, E2) par rapport au porte-caméra (W),
- la direction de déplacement dans le système de coordonnées du robot (RKS) et
- des résultats des étapes C2) et C4),
E) la position et l'orientation du porte-caméra (W) dans le système de coordonnées du robot (RKS) sont interrogées,
F) à partir des résultats des étapes A4), D), et E), ou bien la position et l'orientation du système de coordonnées de caméra (KKS) sont définies dans le système de coordonnées du robot (RKS), ou vice versa.

2. Procédé selon la revendication 1,**caractérisé en ce que** la première étape B1) est supprimée et, à la place de l'étape B2), est exécutée l'étape suivante :
B2') sur ou dans le premier corps de calibrage (S1) est choisi un deuxième point de référence défini (E2) qui présente une autre distance de la caméra que le premier point de référence et dont la position dans le système de coordonnées de caméra (KKS) est également connue, ou la direction de la ligne de jonction entre le premier et le deuxième point de référence (E1, E2) dans le système de coordonnées de caméra (KKS) étant connue.

3. Procédé selon l'une des revendications 1 ou 2, **caractérisé en ce que** dans l'étape C2), l'orientation relative entre la caméra (K) et le robot (R) n'est pas modifiée.

4. Procédé selon la revendication 3, **caractérisé en ce que** le robot (R) se déplace de façon linéaire pour l'exécution de l'étape C2).

5. Procédé selon l'une des revendications 1 à 4, **caractérisé en ce que** le premier et le deuxième point de référence (E1, E2) sont choisis de sorte que leur ligne de jonction a un tracé parallèle par rapport à l'axe optique (A) de la caméra (K).

6. Procédé selon la revendication 5, **caractérisé en ce que** le premier et le deuxième point de référence (E1, E2) sont choisis respectivement sur l'axe optique (A) de la caméra (K).

7. Procédé selon l'une des revendications 1 à 6, **caractérisé en ce que** comme système de coordonnées de caméra (KKS) est choisi un système de coordonnées cartésien (KKS) dont l'axe z a un tracé parallèle à l'axe optique (A) de la caméra (K).

8. Procédé selon l'une des revendications 1 à 7, **caractérisé en ce que** l'origine du système de coordonnées de caméra (KKS) est choisie sur l'axe optique (A) de la caméra (K).

9. Procédé selon l'une des revendications 1 à 8 **caractérisé en ce que** l'origine du système de coordonnées de camára (KKS) est choisi dans le plan de l'image (B) de la caméra (K).

10. Procédé selon l'une des revendications 1 à 9 **caractérisé en ce que** à la place de l'étape C3), la caractéristique distinctive (M) se déplace d'un trajet défini à l'opposé du sens de déplacement, de sorte que l'image de la caractéristique distinctive (M) occupe la deuxième position (M") dans le plan de l'image (B) de la caméra (K).

11. Procédé selon l'une des revendications 1 à 10 **caractérisé en ce que** l'axe z du système de coordonnées du robot (RKS) a un tracé vertical et le sens de déplacement est choisi à l'horizontale.

12. Procédé selon l'une des revendications 1 à 11 **caractérisé en ce que** la direction de déplacement est choisie parallèlement au plan x-y du système de coordonnées du robot (RKS).

13. Procédé selon l'une des revendications 1 à 12 **caractérisé en ce que** dans l'étape B1) le premier corps de calibrage (S1) est retiré du porte-caméra (W) et qu'ensuite, le deuxième corps de calibrage (S2) est fixé de façon rigide au porte-caméra (W) à la place du premier corps de calibrage (S1).

14. Procédé selon les revendications 6 et 13 **caractérisé en ce que**
- dans l'étape A1), l'objectif de la caméra (K) est retiré de la caméra (K) et le premier corps de calibrage (S1) est disposé de façon rigide sur la caméra (K) à la place de l'objectif,
- et dans l'étape B1), le deuxième corps de calibrage (S2) est disposé de façon rigide sur la caméra (K) à la place du premier corps de calibrage (S1).

15. Procédé selon l'une des revendications 1 à 14 **caractérisé en ce que** une première pointe de calibrage (S1) est utilisée comme premier corps de calibrage (S1) et que l'extrémité (E1) de la première pointe de calibrage (S1) est choisie comme premier point de référence (E1), la position du premier point de référence (E1) par rapport au porte-caméra (W) étant déterminée dans l'étape A3) comme suit :
a1) le robot (R) est piloté de sorte que l'extrémité (E1) de la première pointe de calibrage (S1) atteint un premier point auxiliaire quelconque fixe (H1), le porte-caméra (W) présentant, après que le premier point auxiliaire (H1) ait été atteint, une position et une orientation définies dans le système de coordonnées du robot (RKS), qui sont interrogées,
a2) ensuite, le robot (R) est piloté de sorte que l'extrémité (E1) de la première pointe de calibrage (S1) atteint à nouveau le premier point auxiliaire (H1), le porte-caméra (W) présentant, après que le premier point auxiliaire (H1) ait été atteint, une autre position et orientation par rapport à l'étape a1) dans le système de coordonnées du robot (RKS), qui sont également interrogées,
a3) l'étape a2) est de nouveau exécutée en conséquence pour au moins une autre position et orientation du porte-caméra (W) par rapport aux étapes a1) et a2),
b) et à partir des résultats obtenus dans les étapes a1) à a3) est calculée la position du premier point auxiliaire (H1) et ainsi la position de l'extrémité (E1) de la première pointe de calibrage (S1) par rapport au porte-caméra (W).

16. Procédé selon l'une des revendications 1 à 15 **caractérisé en ce que** une deuxième pointe de calibrage (S2) est utilisée comme deuxième corps de calibrage (S2) et que l'extrémité (E2) de la deuxième pointe de calibrage (S2) est choisie comme deuxième point de référence (E2), la position du deuxième point de référence (E2) par rapport au porte-caméra (W) étant définie dans l'étape B3) comme suit :
c1) le robot (R) est piloté de sorte que l'extrémité (E2) de la deuxième pointe de calibrage (S2) atteint un deuxième point auxiliaire quelconque fixe (H2), le porte-caméra (W) présentant, après que le deuxième point auxiliaire (H2) ait été atteint, une position et une orientation définies dans le système de coordonnées du robot (RKS), qui sont interrogées,
c2) ensuite, le robot (R) est piloté de sorte que l'extrémité (E2) de la deuxième pointe de calibrage (E2) atteint à nouveau le deuxième point auxiliaire (H2), le porte-caméra (W) présentant après que le deuxième point auxiliaire (H2) ait été atteint, une autre position et orientation par rapport à l'étape c1) dans le système de coordonnées du robot (RKS), qui sont également interrogées,
c3) l'étape c2) est de nouveau exécutée en conséquence pour au moins une autre position et orientation du porte-caméra (W) par rapport aux étapes c1) et c2),
d) et à partir des résultats obtenus dans les étapes c1) à c3) est calculée la position du deuxième point auxiliaire (H2) et ainsi la position de l'extrémité (E2) de la deuxième pointe de calibrage (S2) par rapport au porte-caméra (W).

17. Procédé selon l'une des revendications 1 à 15 **caractérisé en ce que** le déplacement du robot (R) n'est pas translatoire pendant l'exécution de l'étape A3) et/ou pendant l'exécution de l'étape B3).

18. Procédé selon l'une des revendications 1 à 17 **caractérisé en ce que** le processus décrit précédemment s'exécute de façon automatique.

19. Procédé selon l'une des revendications 15 ou 16 **caractérisé en ce que** pour augmenter la précision de la mesure, l'étape a3) est exécutée plus d'une fois, et de ce fait, le premier point auxiliaire est atteint plus de trois fois, et/ou l'étape c3) est exécutée plus d'une fois, et ainsi le deuxième point auxiliaire (H2) est atteint plus de trois fois.

20. Procédé selon l'une des revendications 15, 16 ou 19, **caractérisé en ce que** le premier point auxiliaire (H1) est marqué par un repère fixe, et/ou le deuxième point auxiliaire (H2) est marqué par un repère fixe.

21. Procédé selon l'une des revendications 15, 16, 19 ou 20,
**caractérisé en ce que** le premier et le deuxième point auxiliaire (H1, H2) sont choisis identique l'un à l'autre.

22. Procédé selon l'une des revendications 1 à 21 **caractérisé en ce que** les étapes C1) et C3) sont exécutées avant les étapes B1) à (B3) ou avant les étapes A1 à A4).

23. Procédé selon l'une des revendications 1 à 22 **caractérisé en ce que** un programme de traitement des images est utilisé pour la saisie des positions (M', M") de l'image de la caractéristique distinctive (M) dans le plan de l'image (B).

24. Procédé selon l'une des revendications 1 à 23 **caractérisé en ce que** les résultats du procédé sont utilisés afin de compenser les imprécisions ou les erreurs du robot.

25. Procédé selon l'une des revendications 1 à 24 **caractérisé en ce que** par dérogation à la revendication 1, dans l'étape C3), l'orientation de la caméra (K) est modifiée par rapport à la caractéristique (M), dans la mesure où la caméra (K) est faite pivoter autour d'un axe aussi bien vertical par rapport au sens de déplacement que par rapport à l'axe optique de la caméra (K).

26. Procédé selon l'une des revendications 1 à 25 **caractérisé en ce que** le procédé s'effectue à l'aide de données numériques exactes, en particulier de données CAO.

27. Procédé selon l'une des revendications 1 à 26 **caractérisé en ce que** le système de coordonnées du robot (RKS) et/ou le système de coordonnées d'une caméra (KKS) est un système de coordonnées cartésien.
